# EUROPEAN PATENT SPECIFICATION

(11) **EP 4 586 207 B1**
(45) Date of publication and mention of the grant of the patent: **09.12.2026**
(21) Application number: 23883118.4
(22) Date of filing: 26.10.2023
(51) Int. Cl.: G06T 19/00, B60K 35/233, G02B 27/01, G06N 20/00

(54) **DISPLAY DEVICE FOR VEHICLE AND CONTROL METHOD THEREFOR**
ANZEIGEVORRICHTUNG FÜR EIN FAHRZEUG UND STEUERUNGSVERFAHREN DAFÜR
DISPOSITIF D'AFFICHAGE POUR VÉHICULE ET SON PROCÉDÉ DE COMMANDE

(30) Priority: 26.10.2022 KR 20220138999
(43) Date of publication of application: 16.07.2025
(73) Proprietor: LG Electronics Inc., Yeongdeungpo-gu Seoul 07336 (KR)
(72) Inventor: RYU, Juhyeok, Seoul 06772 (KR); LEE, Kyoungil, Seoul 06772 (KR); LEE, Seunggyu, Seoul 06772 (KR)
(74) Representative: Vossius & Partner Patentanwälte Rechtsanwälte mbB
(86) International application number: PCT/KR2023/016728
(87) International publication number: WO 2024/091013

(56) References cited:
- WO-A1-2019/001887
- WO-A1-2020/075911
- JP-A- 2017 013 590
- JP-A- 2017 087 826
- KR-A- 20210 055 570
- KR-A- 20210 081 939
- KR-A- 20220 075 696
- KR-A- 20220 075 696
- US-A1- 2020 361 482
- US-A1- 20250 060 605

## Description

### [Technical Field]

The present disclosure relates to a display device for a vehicle, and more particularly, to a display device for a vehicle that may implement an augmented reality-based head-up display by projecting an augmented reality object (or an augmented reality image or graphic) to a subject object (or an external object) to correspond thereto, and a method for controlling the same.

### [Background]

A vehicle is an apparatus that moves in the direction desired by a user riding in it. A representative example is an automobile. WO 2020/075911 A1 and US 2020/361482 A1 form part of the related art.

Meanwhile, a display device for a vehicle is installed inside the vehicle, for the convenience of a user using the vehicle.

For example, a display is placed on a cluster, etc., to display various types of information. Meanwhile, in order to display vehicle driving information, etc., separately from the cluster, various displays, such as an Audio Video Navigation (AVN) display and a head-up display configured to output a projection image on a windshield, includes been installed in a vehicle.

Meanwhile, the information displayed through a head-up display is increasing. For example, information on a road, an automobile, and a surrounding object in a street need to be displayed in order to realize an augmented reality-based head-up display,

However, depending on a change in an external environment while the vehicle is in operation, the display device for the vehicle may unintentionally project an augmented reality object to an undesired location. The external environment may include at least one of a movement of the vehicle, a geographical (topographical) condition of the road, and a physical condition and a movement of a driver (the user).

### [Summary]

### [Technical Problem]

The present disclosure is proposed to solve the aforementioned problem, and is to provide a display device for a vehicle and a method for controlling the same that enable an augmented reality object to be projected to a desired location despite a change in an external environment while the vehicle is in operation.

### [Technical Solutions]

The invention is specified in the independent claims. Preferred embodiments are defined in the dependent claims. According to one aspect of the present disclosure, to achieve the above purpose, provided is a display device for a vehicle including a picture generation unit that outputs an augmented reality object corresponding to a subject object, a mirror that reflects the augmented reality object towards a windshield of the vehicle, storage that stores an objective function for determining a projection location of the augmented reality object, and a controller that receives a state of the vehicle, and controls the picture generation unit that outputs the augmented reality object to be calibrated based on the received state of the vehicle and the objective function, wherein the objective function is generated based on at least one of the observed state of the vehicle, of the subject object and of the user.

The objective function may be generated via reinforcement learning of an artificial intelligence model.

The objective function may be generated by combining the artificial intelligence model subjected to the reinforcement learning with a Newton-Raphson method model.

The state of the vehicle may include at least one of vehicle posture information, vehicle collision information, vehicle direction information, vehicle location information (GPS information), vehicle angle information, vehicle speed information, vehicle acceleration information, vehicle tilt information, and vehicle forward/backward movement information.

The controller may further receive a state of the subject object, and control the picture generation unit that outputs the augmented reality object to be calibrated based on the received state of the subject object, the state of the vehicle, and the objective function.

The state of the subject object may include information on at least one of presence or absence of the subject object, a type of the subject object, a shape of the subject object, a size of the subject object, and a movement of the subject object.

The controller may further receive a state of a user, and control the picture generation unit that outputs the augmented reality object to be calibrated based on the received state of the user, the state of the subject object, the state of the vehicle, and the objective function.

The state of the user may include information on at least one of presence or absence of the user and a location of an eyebox of the user.

The display device may further include a mirror actuator that performs at least one of a movement and a rotation of the mirror, and the controller may control the mirror actuator to perform at least one of the movement and the rotation of the mirror based on the received state of the user, the state of the subject object, the state of the vehicle, and the objective function.

The artificial intelligence model may be based on a proximal policy optimization (PPO) algorithm or a soft actor-critic (SAC) algorithm.

In addition, according to another aspect of the present disclosure, to achieve the above purpose, provided is a method for controlling a display device for a vehicle including receiving a state of the vehicle, and calibrating a picture generation unit that outputs an augmented reality object based on an objective function for determining a projection location of the augmented reality object corresponding to a subject object and the received state of the vehicle, wherein the objective function is generated based on at least one of the observed state of the vehicle, of the subject object and of the user.

### [Advantageous Effects]

The effects of the display device for the vehicle and the method for controlling the same according to the present disclosure will be described as follows.

According to at least one of many aspects of the present disclosure, the display device for the vehicle may provide the more accurate augmented reality-based head-up display to the user by projecting the augmented reality object to the desired location despite the change in the external environment during the operation of the vehicle.

### [Brief Description of the Drawings]

FIG. 1 is a drawing illustrating an example of the exterior and interior of a vehicle.
FIGS. 2 and 3 are drawings illustrating various examples of the internal configuration of a display device for a vehicle related to the present disclosure.
FIG. 4 illustrates an example of an augmented reality-based head-up display for a vehicle implemented by a display device for a vehicle according to one aspect of the present disclosure.
FIG. 5 is a diagram for illustrating a displacement of a virtual image in a display device for a vehicle in FIG. 3.
FIG. 6 is a table showing results of comparison between predicted values by modeling and values by regression.
FIG. 7 illustrates a relationship between normalized domain and range.
FIG. 8 illustrates parameters in Mathematical Equation 10 and in Mathematical Equation 11 of the present disclosure.
FIG. 9 illustrates parameters for reinforcement learning that increase overlap between an augmented reality object provided by a display device for a vehicle according to the present disclosure and a subject object.
FIG. 10 illustrates PSDs of various terrains.
FIG. 11 illustrates simulation class categorization based on degrees of freedom of a vehicle, a subject object, and an eyebox.
FIG. 12 illustrates overlap between an augmented reality object and a subject object when there is no projection correction of the augmented reality object.
FIGS. 13 and 14 illustrate overlap between an augmented reality object and a subject object when projection correction of the augmented reality object is performed in class 1 according to one aspect of the present disclosure.
FIGS. 15 and 16 illustrate overlap between an augmented reality object and a subject object when performing projection correction of the augmented reality object in class 2 according to one aspect of the present disclosure.
FIG. 17 illustrates overlap between an augmented reality object and a subject object when performing projection correction of the augmented reality object in classes 3 and 4 according to one aspect of the present disclosure.
FIG. 18 is a flowchart of generating an objective function for overlap between an augmented reality object and a subject object according to one aspect of the present disclosure.
FIGS. 19 and 20 illustrate overlap between an augmented reality object and a subject object when performing projection correction of the augmented reality object based on an objective function generated by combining a traditional method with reinforcement learning according to one aspect of the present disclosure.
FIG. 21 is a block diagram of a vehicle according to one aspect of the present disclosure.
FIG. 22 illustrates a learning processor according to one aspect of the present disclosure.
FIG. 23 is an implementation flowchart of an augmented reality-based head-up display according to one aspect of the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

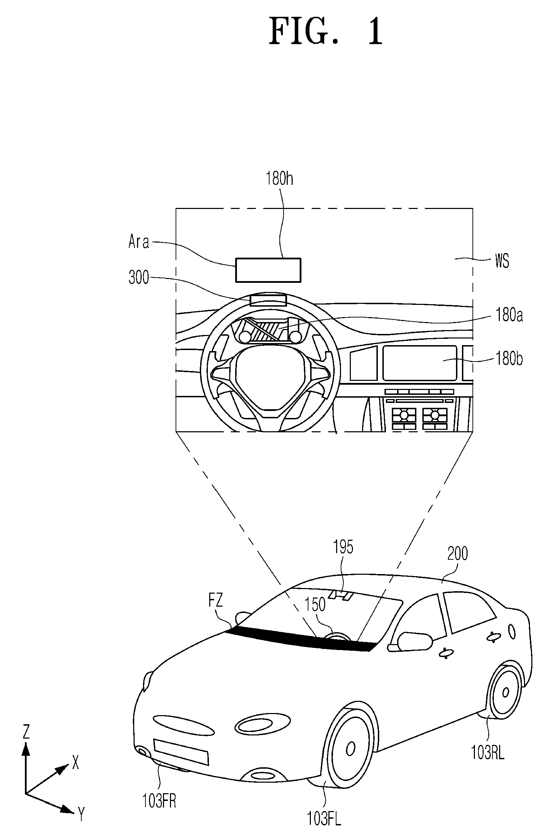

Hereinafter, an example of exterior and interior of a vehicle will be described with reference to FIG. 1. FIG. 1 is a drawing showing an example of the exterior and interior of a vehicle.

As shown in FIG. 1, a vehicle 200 is operated by a plurality of wheels 103FR, 103FL, 103RL,... that rotate by a power source and a steering wheel 150 for controlling the moving direction of the vehicle 200.

Meanwhile, the vehicle 200 can further include a camera 195 for obtaining images in front of the vehicle.

Meanwhile, the vehicle 200 can include a plurality of displays 180a, 180b, 180h, which display images, information, etc., that are provided therein.

For example, among the plurality of displays 180a, 180b, 180h, a first display 180a can be a cluster display, a second display 180b can be an Audio Video Navigation (AVN) display, and a third display 180h can be a HUD display which is a head up display (HUD) that projects an image onto a certain separated area Ara on a windshield WS.

Meanwhile, a display device for a vehicle according to the present disclosure is a device for the HUD display 180h.

Meanwhile, a black masking area or a frit area Fz can be formed in the lower area of the windshield WS, as shown in the drawing.

In one example, the vehicle 200 described herein may be a concept that includes all of a vehicle equipped with an engine as a power source, a hybrid vehicle equipped with the engine and an electric motor as the power sources, an electric vehicle equipped with the electric motor as the power source, and the like. The vehicle 200 described herein is a concept that includes vehicles for all purposes, such as passenger, commercial, military, and construction vehicles.

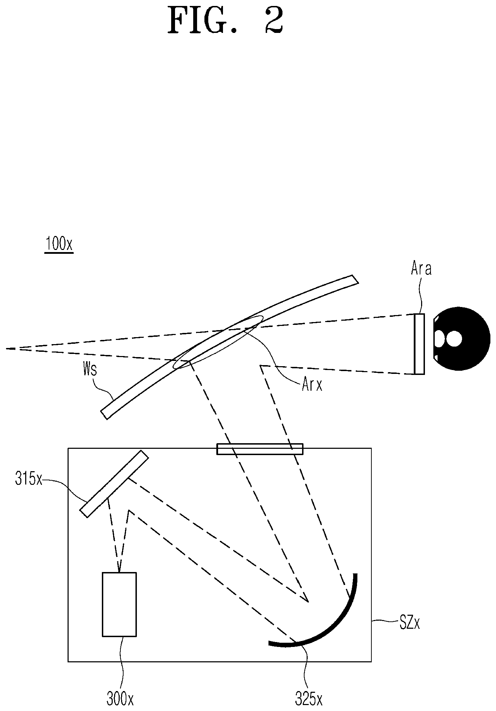

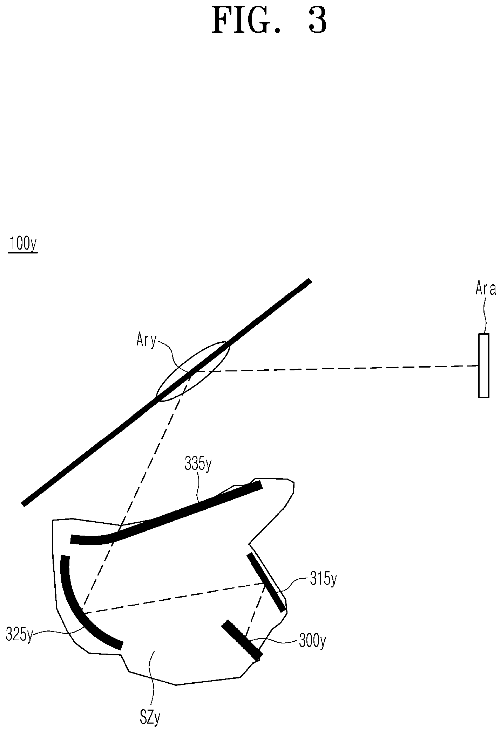

Hereinafter, with reference to FIGS. 2 and 3, internal components of the display device for the vehicle related to the present disclosure will be described. FIGS. 2 and 3 are diagrams illustrating various examples of internal components of a display device for a vehicle related to the present disclosure.

FIG. 2 illustrates an example of a display device for a vehicle related to the present disclosure.

Referring to FIG. 2, a display device 100x for a vehicle related to the present disclosure includes a liquid crystal display panel 300x configured to output a projection image, a fold mirror 315x configured to reflect the projection image from the liquid crystal display panel 300x, and a concave mirror 325x configured to reflect the projection image from the fold mirror 315x to a windshield WS. In one example, the picture generation unit may be equipped as, in addition to the liquid crystal display panel, an organic light emitting diode (OLED), a digital light processing (DLP), a liquid crystal on silicon (L-cos), a micro light emitting diode (LED), and the like. The same applies below.

The projection image reflected from a certain area Arx of the windshield WS is output to a driver's viewing area Ara.

The concave mirror 325x within the display device 100x for the vehicle is disposed between the liquid crystal display panel 300x and the driver's viewing area Ara. That is, the concave mirror 325x may be positioned between two virtual parallel lines passing through the liquid crystal display panel 300x and the driver's viewing area Ara respectively, with a gap corresponding to a separation distance between the liquid crystal display panel 300x and the driver's viewing area Ara.

Meanwhile, the concave mirror 325x in the display device 100x for a vehicle determines the arrangement of the projection image and the position of the light source.

For example, by increasing the magnification of the concave mirror 325x in the display device 100x for a vehicle and reducing the focal length, the size SZx of the display device 100x for a vehicle can be reduced.

However, when reducing the size in this way, it becomes difficult to realize a projection image on a large screen, which includes the disadvantage of making it difficult to realize an AR HUD.

FIG. 3 illustrates another example of a display device for a vehicle related to the present disclosure.

Referring to FIG. 3, a display device 100y for a vehicle related to the present disclosure includes a liquid crystal display panel 300y configured to output a projection image, a fold mirror 315y configured to reflect the projection image from the liquid crystal display panel 300y, a concave mirror 325y configured to reflect the projection image from the fold mirror 315y, and a transparent cover 335y configured to output the projection image from the concave mirror 325y to a windshield WS.

A projection image reflected from a certain area Ary of the windshield WS is output to a driver's viewing area Ara.

Unlike FIG. 2, the concave mirror 325y in the display device 100y for a vehicle is disposed in front of the liquid crystal display panel 300y and the driver's viewing area Ara.

That is, the liquid crystal display panel 300y within the display device 100y for the vehicle is disposed between the concave mirror 325y and the driver's viewing area Ara. That is, the liquid crystal display panel 300y may be positioned within two virtual parallel lines passing through the concave mirror 325y and the driver's viewing area Ara respectively, with a gap corresponding to a separation distance between the concave mirror 325y and the driver's viewing area Ara.

Meanwhile, the concave mirror 325y in the display device 100y for a vehicle determines the arrangement of the projection image and the position of the light source.

For example, by increasing the magnification of the concave mirror 325y in the display device 100y for a vehicle and reducing the focal length, the size SZy of the display device 100y for a vehicle can be reduced.

Hereinafter, reference numeral "100" will be used to collectively refer to the display device for the vehicle in FIG. 2 and the display device for the vehicle in FIG. 3.

A head-up display for a vehicle to be described below may not be limited to the types of the head-up displays for the vehicle in FIGS. 2 and 3, but may be applied to all types of head-up displays for the vehicle to view a virtual image reflected on a windshield.

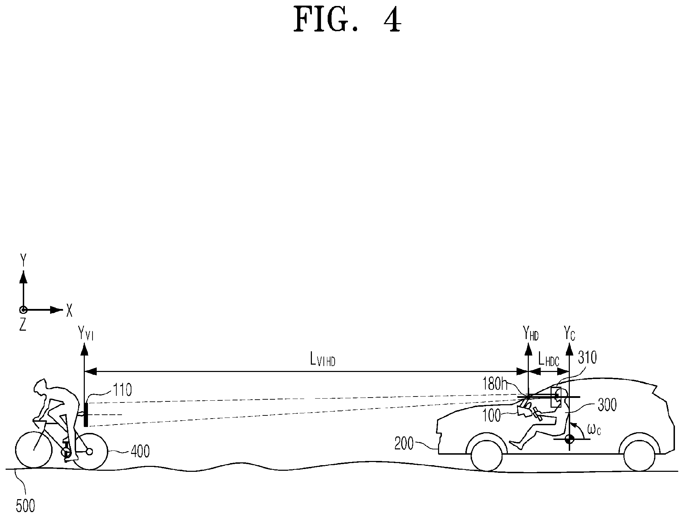

Hereinafter, with reference to FIG. 4, an augmented reality-based head-up display for the vehicle will be described. FIG. 4 illustrates an example of the augmented reality-based head-up display for the vehicle implemented by the display device for the vehicle according to one aspect of the present disclosure.

To implement the augmented reality-based head-up display for the vehicle, the vehicle 200 (or the head-up display 180h), a driver 300 (or a driver's field of vision (eyebox) 310), and a subject object 400 may be considered. The vehicle 200, which corresponds to a dynamic element, is affected by slope and unevenness of ground 500 with randomness and a suspension of the vehicle 200, as well as the number and weights of passengers and a tire pressure. Such random dynamic factors make it difficult to establish a connection between a freeform design of the head-up display 180h for the display device 100 for the vehicle 100 and the subject object 200 that augmented reality aims for.

An image output from the PGU 300x and 300y of the display device 100 for the vehicle is projected as a virtual augmented reality object onto the head-up display 180h ahead via an intermediate optical system, and the projected augmented reality object 110 is only observable in the driver's field of vision (the eyebox) 310, which is a range in which both eyes of the driver 300 may move. Because of such special characteristic, it is virtually impossible to track a location of the virtual image in real time.

It may be necessary to observe the vehicle 200, the ground 500, and the driver's field of view 310, which are variable factors, via the camera, and calculate an appropriate compensation value based on a displacement of each factor. To this end, it is necessary to input simulation-based discrete correction information that considers a displacement in an x-axis direction (a distance) and a displacement in a y-axis direction (a vertical level change) of the subject object 400. However, the discrete correction information is not able to include all degrees of freedom of the subject object 400 and the vehicle 200, so that continuity and accuracy are not able to be guaranteed. A physical cost resulted from camera installation, and a computational cost and a time delay resulted from an intermediate computational process also inevitably occur.

Previously, there were efforts to solve such problem using numerical analysis approaches such as the Newton Rapson Method or the Kalman Filter (KF).

However, although the Newton Rapson Method showed good performance with relatively few computations in finding an optimal solution of an approximate function, it showed limitations in that it was affected by selection of an initial value and its accuracy did not go beyond accuracy of the approximate function obtained via curve fitting.

On the other hand, in a case of an Extended Kalman Filter (EKF), the optical system was sensitive to a decrease in continuity because of off-axis design of the display device 100 for the vehicle, so that even a small error in linear optimization in a narrow section of the EKF method was able to be greatly amplified depending on an area through which an optical path passes. Therefore, there were limitations in maintaining uniformity in the entire area.

In addition, in a case of an Unscented Kalman Filter (UKF), the linearization process in the EKF was omitted and optimization was performed via sampling, so that the limitations of the linear approximation were overcome and, in some cases, a relatively accurate solution was derived for a non-linear problem. However, it showed a problem that an estimated error covariance was not stable enough to cause divergence.

Accordingly, in the present disclosure, minimizing the influence on the overlap between the subject object 400 and the augmented reality object 110 from the external environment using reinforcement learning (RL) will be described.

First, a displacement of the virtual image (e.g., the augmented reality object 110) will be described.

For the sake of simplicity in description, in dynamic modeling of the present disclosure, a dimension of a model will be limited to two dimensions and only a displacement in the vertical direction will be considered.

When a vertical displacement of the vehicle 200 is yc and an angle change in a pitching direction is ωc, a vertical displacement yVI of the virtual image will be described as follows. [Mathematical Equation 1] $\begin{matrix}{y}_{VI} = {ω}_{c} {l}_{VIHD} + {ω}_{c} {l}_{HDC} + {y}_{C} \\ {\dot{y}}_{VI} = {\dot{ω}}_{C} {l}_{VIHD} + {\dot{ω}}_{C} {l}_{HDC} + {\dot{y}}_{C}\end{matrix}$

Besides the change in the location of the virtual image resulted from the change in the posture of the vehicle, a displacement resulted from a change in a shape of the vehicle caused by a force may be ignored because it is insignificant as the vehicle is made of a rigid body.

Hereinafter, a displacement for compensation will be described.

The displacement of the virtual image obtained from the Mathematical Equation 1 may vary displacements of the pixels for generating the virtual image on the PGU 300x and 300y to maintain the overlap with the subject object 400 ahead assumed to be in a static state.

A general optical system constituting the display device 100 for the vehicle may include the PGU 300x and 300y, the fold (flat) mirror 315x and 315y, the concave mirror 325x and 325y, and the windshield WS.

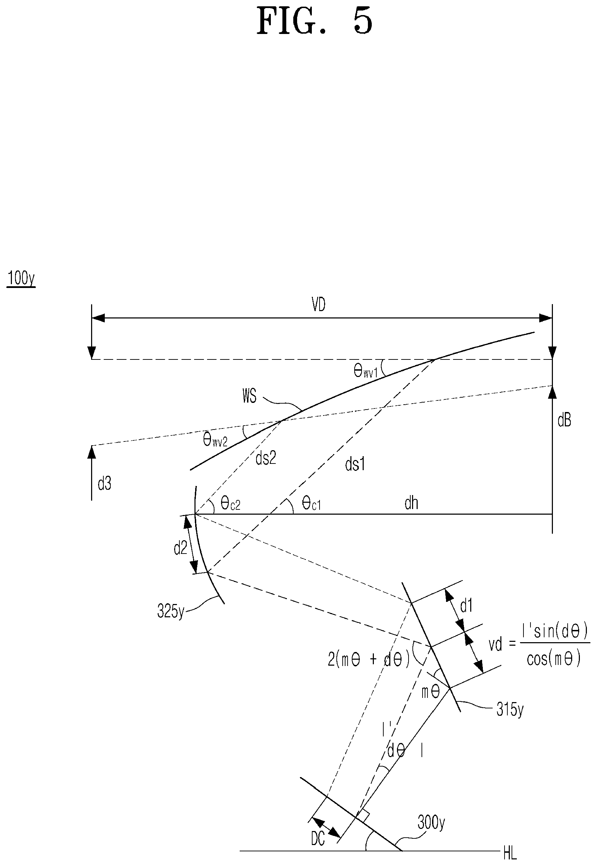

A displacement of the virtual image on the fold mirror, a displacement of the virtual image on the concave mirror, and a displacement of the virtual image on the windshield based on a displacement DC of the pixel on the PGU will be described with reference to FIG. 5. FIG. 5 is a diagram for illustrating a displacement of a virtual image in a display device for a vehicle in FIG. 3.

In FIG. 5, displacements d1, d2, and d3 of the virtual images respectively on the fold mirror 315y, the concave mirror 325y, and the windshield WS may be calculated as in Mathematical Equation 2 below. [Mathematical Equation 2] $\begin{matrix}d 1 = \frac{vd \times DC}{l \times tan \left(dθ\right)} \\ d 2 = \frac{1}{sin \left(3θ\right)} \times \left(\frac{l " tan \left(mθ\right) - l " tan \left(mθ+dθ\right) - d 1}{tan \left(90°+3θ\right) + tan \left(mθ\right)}\right) \\ d 3 = VD \times \left(\left(tan\left(2{θ}_{wv 2}-{θ}_{c 2}\right)-tan\left(2{θ}_{wv 1}-{θ}_{c 1}\right)\right)+dB\right.\end{matrix}$

In the Mathematical Equation 2, dB is as shown in Mathematical Equation 3 below. [Mathematical Equation 3] $\begin{matrix}dB = ds 1 {sinθ}_{c 1} - ds 2 {sinθ}_{c 2} \\ + tan \left({θ}_{wv 1}-{θ}_{c 1}\right) \left(dh\right. \\ - \left(dc+ds1{cosθ}_{c 1}\right) \\ - tan \left(2{θ}_{wv 2}-{θ}_{c 2}\right) \left(dh-ds2{cosθ}_{c 2}\right)\end{matrix}$

In the Mathematical Equation 3, dc is as shown in Mathematical Equation 4 below. [Mathematical Equation 4] $dc = da \left(\frac{cos \left({θ}_{0}\right)}{sin \left(3θ\right)}+\frac{sin \left({θ}_{0}\right)}{sin \left(3θ\right)}tan\left(AFM-2{θ}_{1}-mθ\right)\right)$

In the Mathematical Equation 4, da is as shown in Mathematical Equation 5 below. [Mathematical Equation 5] $da = sin \left(3θ\right) d 2$

In such a case, a primary goal of the present disclosure is to obtain a value of the displacement DC of the pixel on the PGU satisfying Mathematical Equation 6 below. [Mathematical Equation 6] ${y}_{VI} = DC$

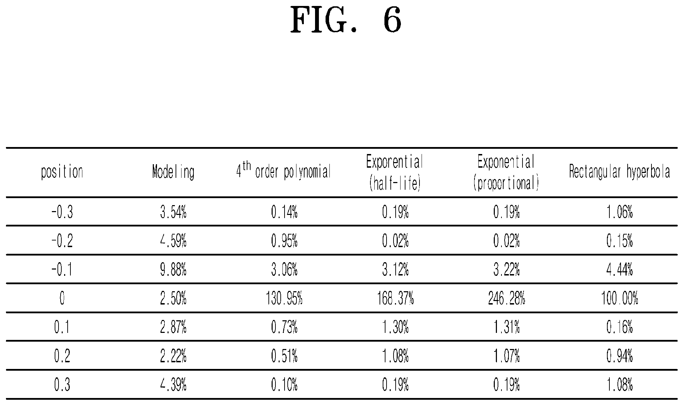

Results of comparison between predicted values by modeling and values by regression are as shown in FIG. 6. FIG. 6 is a table showing results of comparison between predicted values by modeling and values by regression.

A difficulty of functionalizing an optical path by an aspherical mirror on the optical path and a high sensitivity resulted from a magnification may be seen therefrom.

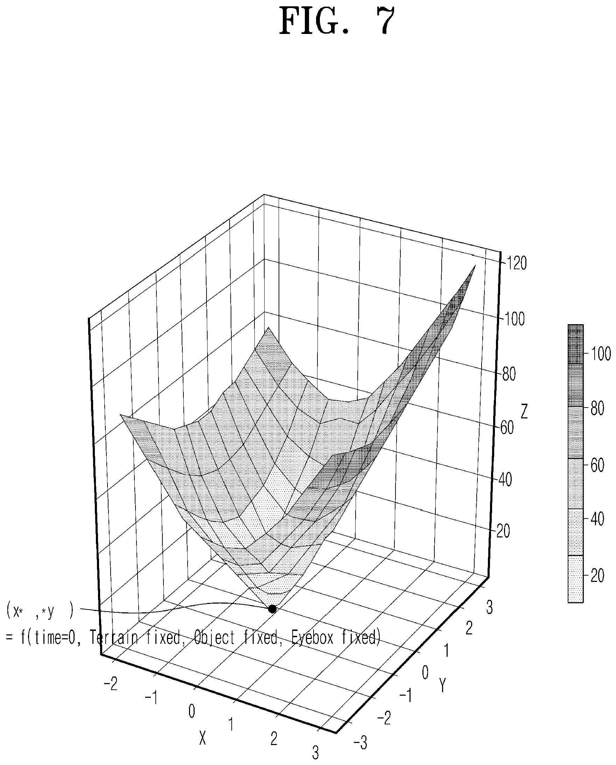

FIG. 7 illustrates a relationship between normalized domain and range. Through FIG. 7, sensitivity in the relationship between the normalized domain and range may be seen.

Hereinafter, utilizing a traditional method such as the Extended Kalman Filter (EKF) in calculating the optimal solution for the one goal of the present disclosure will be described.

To this end, state variables may be determined as shown in Mathematical Equation 7 below. [Mathematical Equation 7] $x = \left(\begin{matrix}D \\ {y}_{VI} \\ {y}_{C} \\ {ω}_{c}\end{matrix}\right) = \left(\begin{matrix}{x}_{1} \\ {x}_{2} \\ {x}_{3} \\ {x}_{4}\end{matrix}\right)$

In this case, system modeling is as shown in Mathematical Equation 8 below, and the Jacobian matrix is as shown in Mathematical Equation 9. [Mathematical Equation 8] $\dot{x} = \left(\begin{matrix}{\dot{x}}_{1} \\ {\dot{x}}_{2} \\ {\dot{x}}_{3} \\ {\dot{x}}_{4}\end{matrix}\right) = \left(\begin{matrix}\frac{{\dot{x}}_{2}}{mag} \\ {\dot{x}}_{4} \left({l}_{VIHD}+{l}_{HDG}\right) + {\dot{x}}_{3} \\ {\dot{x}}_{2} - {\dot{x}}_{4} \left({l}_{VIHD}+{l}_{HDG}\right) \\ \frac{{\dot{x}}_{2} - {\dot{x}}_{3}}{\left({l}_{VIHD}+{l}_{HDG}\right)}\end{matrix}\right)$ [Mathematical Equation 9] $F = \left[\begin{matrix}0 & \frac{1}{mag dt} & 0 & 0 \\ 0 & 0 & dt & \left({l}_{VIHD}+{l}_{HDG}\right) dt \\ 0 & dt & 0 & - \left({l}_{VIHD}+{l}_{HDG}\right) dt \\ 0 & - \frac{dt}{\left({l}_{VIHD}+{l}_{HDG}\right)} & \frac{dt}{\left({l}_{VIHD}+{l}_{HDG}\right)} & 0\end{matrix}\right]$

Hereinafter, the use of the reinforcement learning in deriving the optimal solution for the one goal of the present disclosure will be described.

First, artificial intelligence will be described briefly.

Artificial Intelligence (AI) refers to a field that studies artificial intelligence or methodology capable of achieving artificial intelligence. Machine learning refers to a field that defines various problems handled in the AI field and studies methodology for solving the problems. Machine learning may also be defined as an algorithm for raising performance for any task through steady experience of the task.

An artificial neural network (ANN) may refer to a model in general having problem solving capabilities, that is composed of artificial neurons (nodes) constituting a network by a combination of synapses, as a model used in machine learning. The ANN may be defined by a connection pattern between neurons of different layers, a learning process of updating model parameters, and/or an activation function for generating an output value.

The ANN may include an input layer, an output layer, and, optionally, one or more hidden layers. Each layer includes one or more neurons and the ANN may include a synapse connecting neurons. In the ANN, each neuron may output input signals, which are input through the synapse, weights, and function values of an activation function for deflection.

A model parameter refers to a parameter determined through learning and includes a weight of synaptic connection and a deflection of a neuron. A hyperparameter refers to a parameter that should be configured before learning in a machine learning algorithm and includes a learning rate, the number of repetitions, a mini batch size, an initialization function, and the like.

The purpose of learning of the ANN may be understood as determining the model parameter that minimizes a loss function. The loss function may be used as an index to determine an optimal model parameter in a learning process of the ANN.

Machine learning may be classified into supervised learning, unsupervised learning, and reinforcement learning, according to a learning scheme.

Supervised learning refers to a method of training the ANN in a state in which a label for training data is given. The label may represent a correct answer (or result value) that the ANN should infer when the training data is input to the ANN. Unsupervised learning may refer to a method of training the ANN in a state in which the label for the training data is not given.

Reinforcement learning may refer to a learning method in which an agent defined in a certain environment is trained to select a behavior or a behavior order that maximizes accumulative compensation in each state.

Among ANNs, machine learning implemented as a deep neural network (DNN) including a plurality of hidden layers is also called deep learning. Deep learning is a part of machine learning. Hereinbelow, machine learning includes deep learning.

Algorithm for the artificial intelligence as described above may be learned by a controller (not shown) of the vehicle 200 for controlling the display device for the vehicle. Alternatively, the algorithm for the artificial intelligence as described above may be learned in advance at a factory and loaded into the controller of the vehicle 200.

Algorithms applied to deep reinforcement learning (DRL) are proximal policy optimization (PPO) and soft actor-critic (SAC), which are representative algorithms of off-policy and on-policy, respectively. A following description focuses on the PPO and SAC algorithms, but it is obvious that all deep reinforcement learning algorithms may be applied.

In common, a state and an action are as shown in Mathematical Equation 10 and Mathematical Equation 11 below, respectively. [Mathematical Equation 10] ${s}_{t} = \left(\begin{matrix}{θ}_{v} \\ {P}_{v} \\ DAR\end{matrix}\right)$ [Mathematical Equation 11] ${a}_{t} = {P}_{p} or {θ}_{m}$

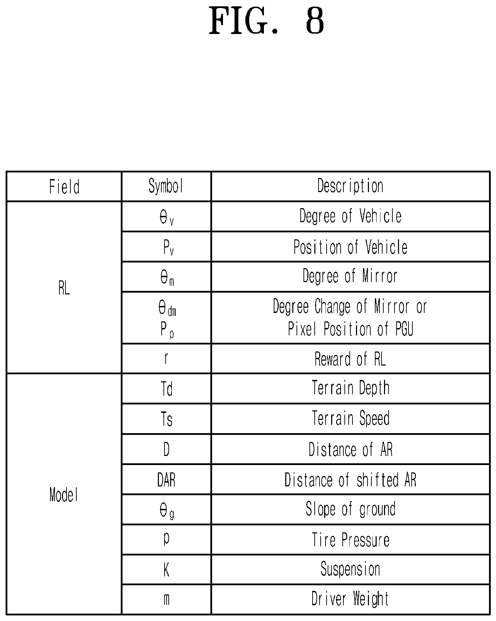

A description of each parameter is as shown in FIG. 8. FIG. 8 illustrates the parameters in Mathematical Equation 10 and in Mathematical Equation 11 of the present disclosure.

A compensation function has a negative distance difference between the static subject object 400 and an imaging point of a chief ray determined by a focal length, and is as shown in Mathematical Equation 12 below. [Mathematical Equation 12] $r \left({s}_{t}, {a}_{t}\right) = - {\left‖DAR\right‖}_{1}$ or
$r \left({s}_{t}, {a}_{t}\right) = - {\left‖DAR\right‖}_{2}$

The display device 100y for the vehicle has a magnification that means a size ratio of the augmented reality object 110 between virtual images of the PGU 300y and a terminal, so that the location of the augmented reality object 110 exhibits a movement amount enlarged by the magnification relative to a displacement amount of a control variable. Therefore, because a proportion of a displacement area of an agent for minimizing an objective function may be seen as very small in an entire search area, actions were performed in the broad search area and continuous update was performed. As a result, the PPO algorithm, as shown in Mathematical Equation 13 below, that determines a policy in an area with the highest reliability was selected. [Mathematical Equation 13] ${L}_{t}^{CLIP + VF + S} \left(θ\right) = {\dot{E}}_{t} \left[{L}_{t}^{CLIP}\left(θ\right)-{c}_{1}{L}_{t}^{VF}\left(θ\right)+{c}_{2}S\left[{π}_{θ}\right]\left({s}_{t}\right)\right]$

In Mathematical Equation 13, VF on a left side is an error loss of a value function and S is an entropy weight. The left side may be determined by a clip term, which limits correlation with a previous policy, minus a sum of C1 and C2 terms, which determines a degree of surrogate loss, on a right side.

In contrast to the on-policy PPO algorithm, the off-policy Soft Actor-Critic (SAC) algorithm adds an entropy measurement term as shown in Mathematical Equation 14 below, enabling search of various areas with possibility excluding less probable paths. [Mathematical Equation 14] $J \left(θ\right) = {\sum }_{t = 1}^{T} {E}_{\left({s}_{t}, {a}_{t}\right) ∼ {ρ}_{πθ}} \left[r\left({s}_{t}, {a}_{t}\right)+αH\left({π}_{θ}\left(⋅\left|{s}_{t}\right.\right)\right)\right]$

That is, entropy may be observed via an H term on a right side, and importance of the entropy observation may be determined via a weight α. Because past experience is also taken into account when selecting the optimal policy, efficiency of a sample may be high and a possibility of getting trapped in local minima may be reduced.

In the present disclosure, because it is necessary to also consider driver's perception in maintaining the overlap with the subject of the display that conveys information to the user, in addition to a displacement that determines the overlap between the subject object 140 and the augmented reality object 110 expressed as distance of shifted AR (DAR), a dynamic visual acuity (DVA) variable was additionally considered.

To determine a degree of achievement of the objective function, an experiment was conducted by performing learning with multi-training (8E) of a unity simulator on Intel(R) Core(TM) i7-10750H CPU@ 2.60GHz and GTX 1660 TI hardware.

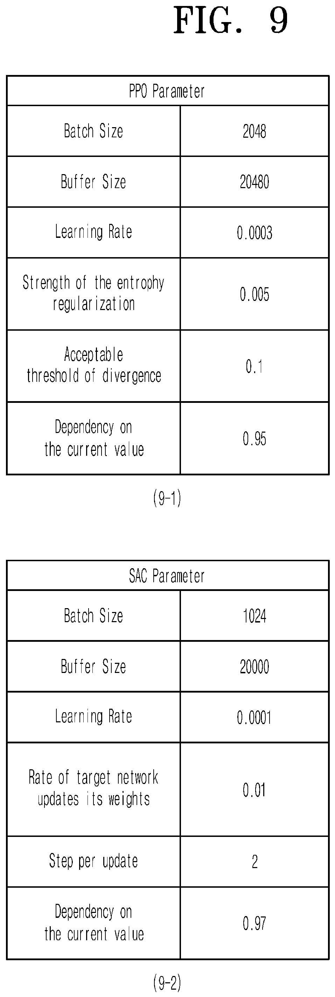

Values of hyper parameters applied to the experiment are as shown in FIG. 9. FIG. 9 illustrates parameters for reinforcement learning that increase overlap between an augmented reality object provided by a display device for a vehicle according to the present disclosure and a subject object.

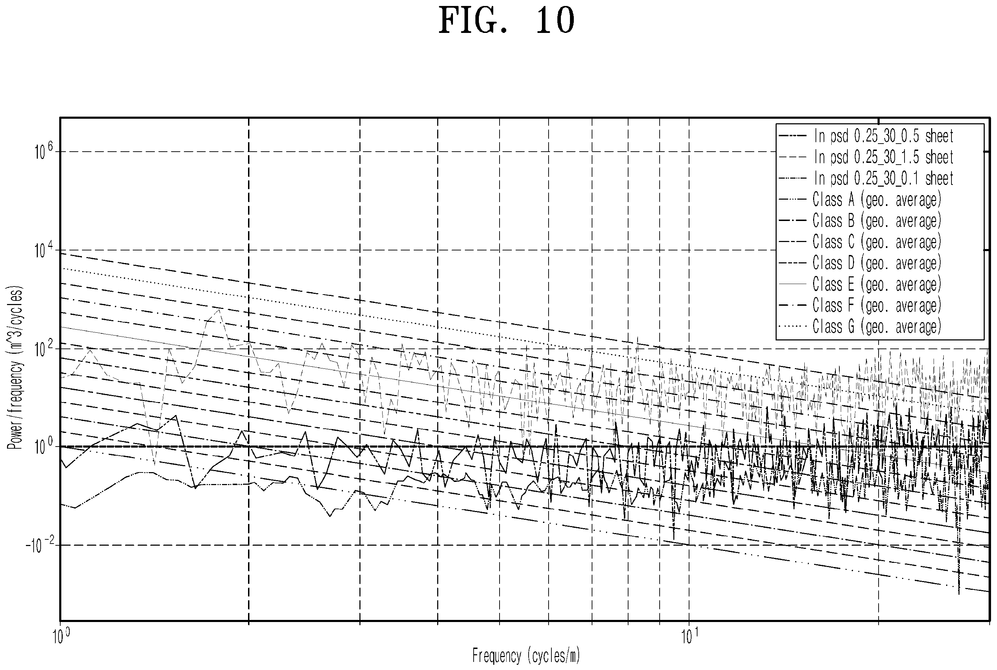

A terrain, which is an uncertainty element, was categorized based on acceleration occurring in the vertical direction on the ground. PSD distribution, which was set with three ground conditions (high, medium, and low) to exceed Class B in a section exceeding 10 cycles/m in pavement conditions of the road categorized by ISO8608 is as shown in FIG. 10. FIG. 10 illustrates PSDs of various terrains.

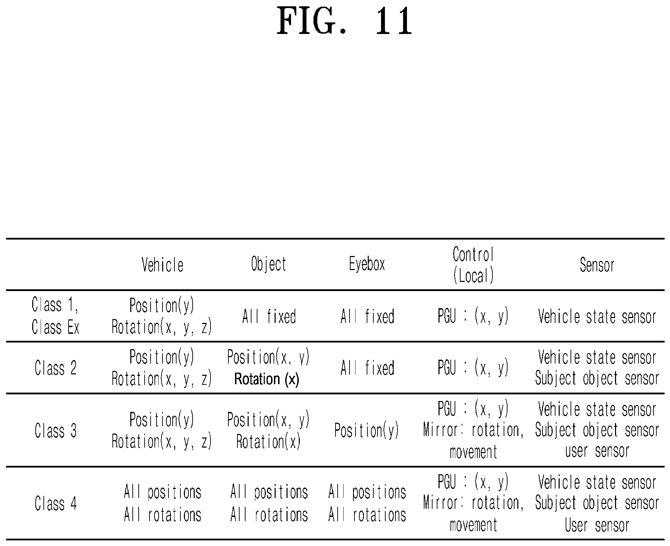

Simulation class categorization based on a degree of freedom is as shown in FIG. 11. FIG. 11 illustrates simulation class categorization based on degrees of freedom of a vehicle, a subject object, and an eyebox.

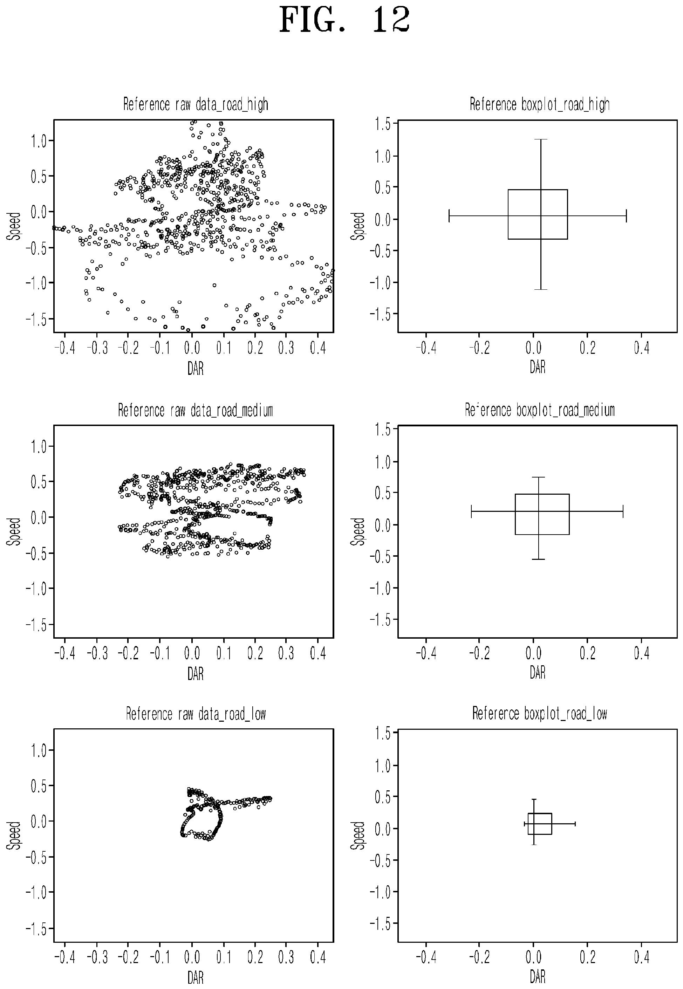

A measurement result using a case in which there is no adjustment (or compensation) for the display projected ahead in the three types of ground (high, medium, and low) categorized above as a reference is as shown in FIG. 12. FIG. 12 illustrates overlap between an augmented reality object and a subject object when there is no projection correction of the augmented reality object.

Hereinafter, based on the overlap in FIG. 12, overlap between the augmented reality object and the subject object will be described for each class.

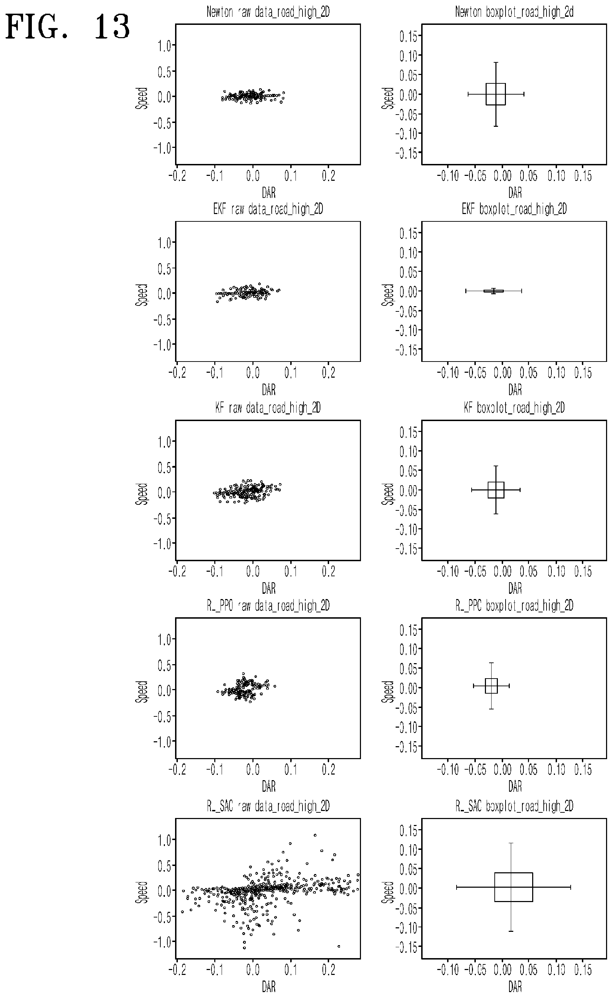

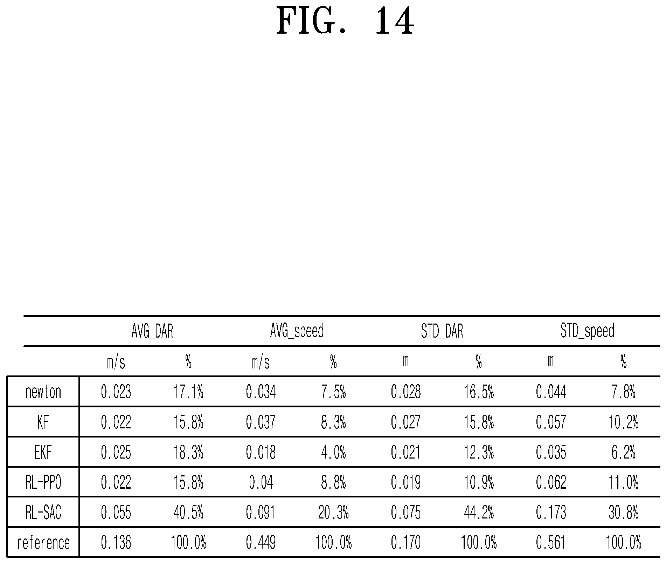

First, for class 1, measurement results for major methods under a condition with the greatest acceleration change are as shown in FIGS. 13 and 14. FIGS. 13 and 14 illustrate overlap between an augmented reality object and a subject object when projection correction of the augmented reality object is performed in class 1 according to one aspect of the present disclosure. For the class 1, a vehicle state sensor to be described later may be used.

In terms of the DVA, the Newton method, the KF method, the EKF method, an RL-PPL method, and an RL-SAC method all showed a common appearance of deviating from a target level of 2m/s. Further, in terms of DAR, the PPO algorithm of the reinforcement learning showed the best result, with an average of 15.8% of the DAR and a standard deviation of 10.9% of the DAR compared to a reference. The KF and the EKF, which are the traditional methods, collected data that showed convergence, but over time, showed divergence as initial stability decreases resulted from a deterioration of normality in the ground condition, showing that they were not stable. The Newton method showed good performance in both the DVR and the DAR, but showed limitations in an increase in complexity resulted from an increase in the degree of freedom and randomness of class 2 and above.

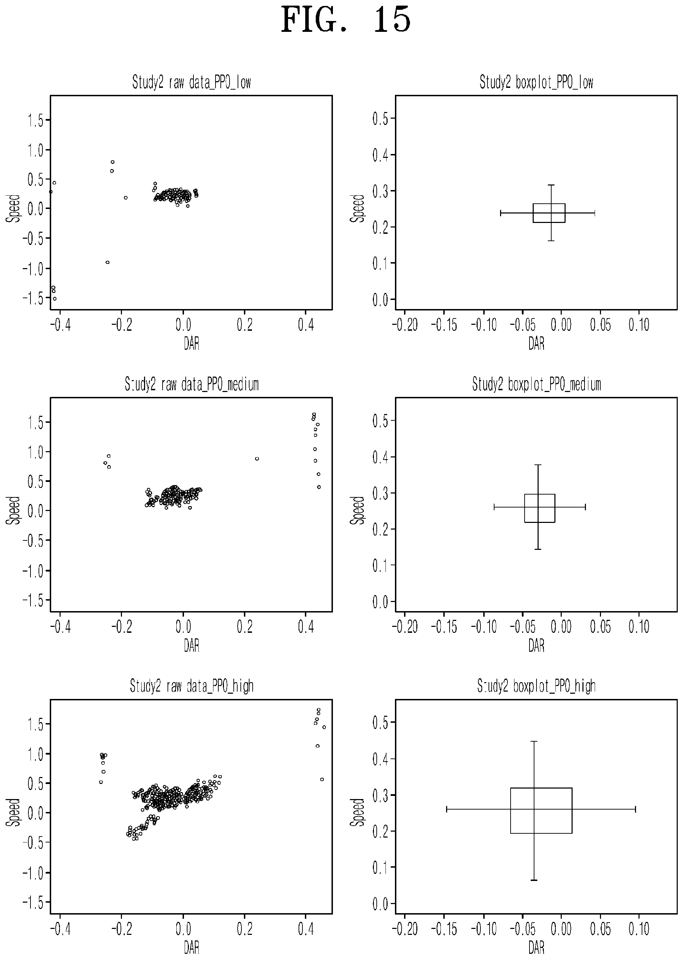

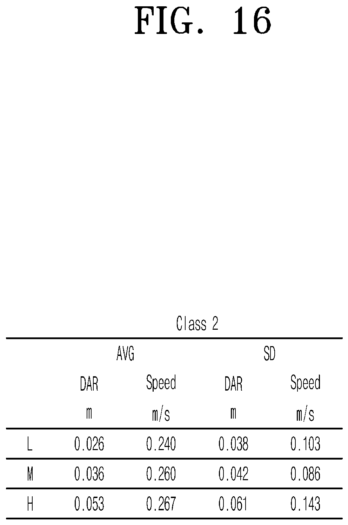

In the case of class 2, a degree of freedom of the subject object 400 located in front of the vehicle 200 was added, and x and y-directional adjustment displacements of the pixel on the PGU 300y were added. Therefore, because the accurate system modeling required for the Newton method and the EKF became impossible, the experiment was conducted only with the PPO of the reinforcement learning. Measurement results for the overlap between the augmented reality object and the subject object according thereto are as shown in FIGS. 15 and 16. FIGS. 15 and 16 illustrate overlap between an augmented reality object and a subject object when performing projection correction of the augmented reality object in class 2 according to one aspect of the present disclosure. For the class 2, the vehicle state sensor and a subject object sensor to be described below may be used.

Classes 3 and 4 are cases with the highest complexity as a displacement of the driver's field of vision was added. As the complexity increases, collisions between agents were sometimes observed and learning was less stable. Nevertheless, both the driver's field of vision and the subject object were tracked well even under the medium road condition. For the classes 3 and 4, the vehicle state sensor, the subject object sensor, and a user sensor to be described below may be used.

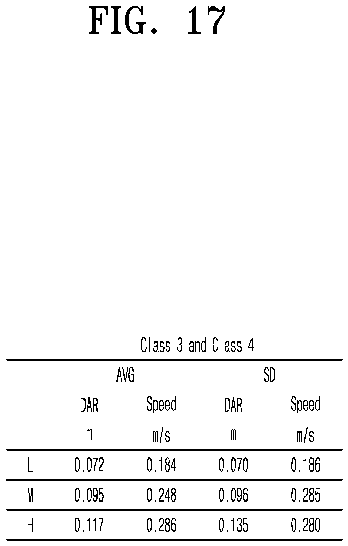

While a performance deteriorated under the condition of high complexity, a possibility of further optimization was shown, and test results are as shown in FIG. 17. FIG. 17 illustrates overlap between an augmented reality object and a subject object when performing projection correction of the augmented reality object in classes 3 and 4 according to one aspect of the present disclosure.

The complexity may increase via the previous experiment. This may be called class Ex. In the case of class Ex, a performance deterioration on the DVA may be greater than a performance deterioration on the DAR. It may be seen that, as the acceleration by the ground increases, a speed of adjusting the displacement of the agent increases and thus the performance on the DVA deteriorates.

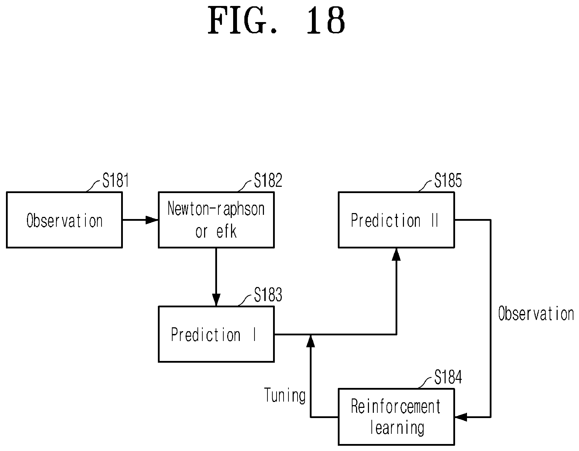

To solve such problem, as shown in FIG. 18, combining the traditional method implemented previously with the reinforcement learning may be considered. FIG. 18 is a flowchart of generating an objective function for overlap between an augmented reality object and a subject object according to one aspect of the present disclosure.

First, at least one of a state of the vehicle, a state of the subject object, and a state of the user may be observed [S181]. The state of the vehicle, the state of the subject object, and the state of the user will be described later.

Based on at least one of the observed state of the vehicle, state of the subject object, and state of the user, the objective function may be generated using a Newton-Raphson or EFK method [S182].

Based on the generated objective function, the overlap between the augmented reality object and the subject object may be primarily predicted [S183].

The generated objective function may be tuned based on the reinforcement learning [S184].

The overlap between the augmented reality object and the subject object may be secondarily predicted based on the tuned objective function, and the secondarily predicted overlap may be utilized for additional learning of the reinforcement learning [S185].

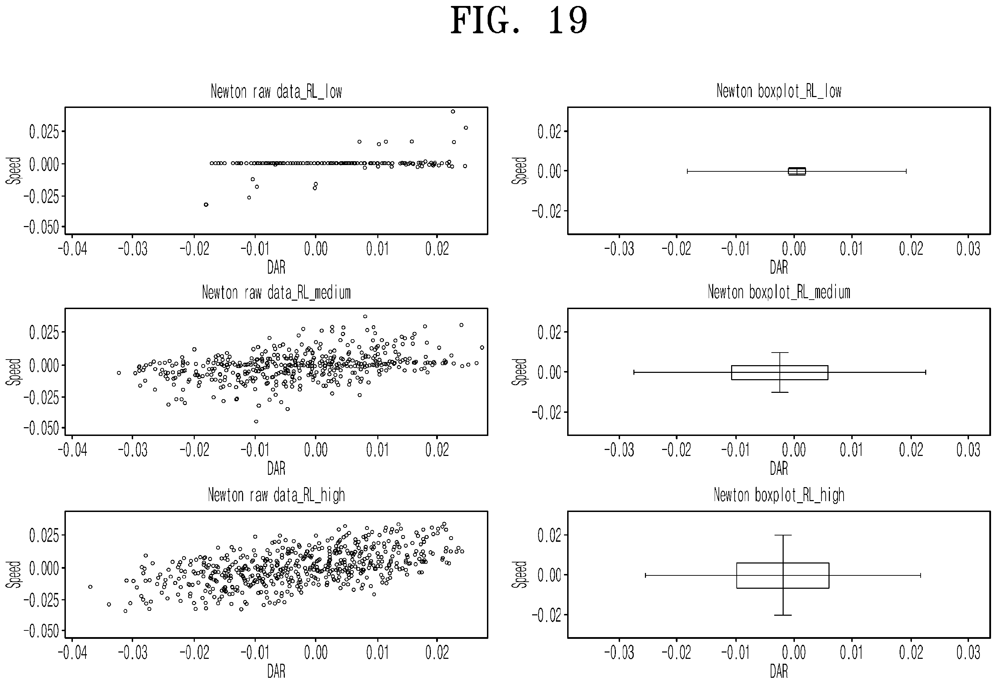

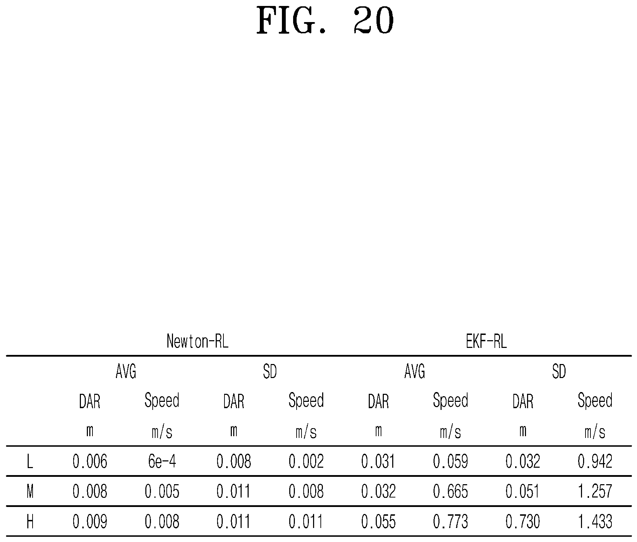

Experimental results according thereto are as shown in FIGS. 19 and 20. FIGS. 19 and 20 illustrate overlap between an augmented reality object and a subject object when performing projection correction of the augmented reality object based on an objective function generated by combining a traditional method with reinforcement learning according to one aspect of the present disclosure.

The present disclosure introduced the reinforcement learning to maintain the overlap state between the virtual image, which is the purpose of the augmented reality object, and the subject object in the display device for the vehicle, identified relationships between major parameter values and the objective function, presented a methodology for shortening a time for reaching an ideal value of the objective function for each condition and for stable learning, and compared objective function performances from the traditional methodology to the reinforcement learning.

Limitations and advantages of each were identified via comparison and application of an appropriate methodology based on a class categorized based on the complexity resulted from an increase in random elements. Based on the above, excellence of the reinforcement learning was identified, the performances of the combinations of the reinforcement learning and the existing methods were tested, and a specific condition with an advantage over the existing methods was found.

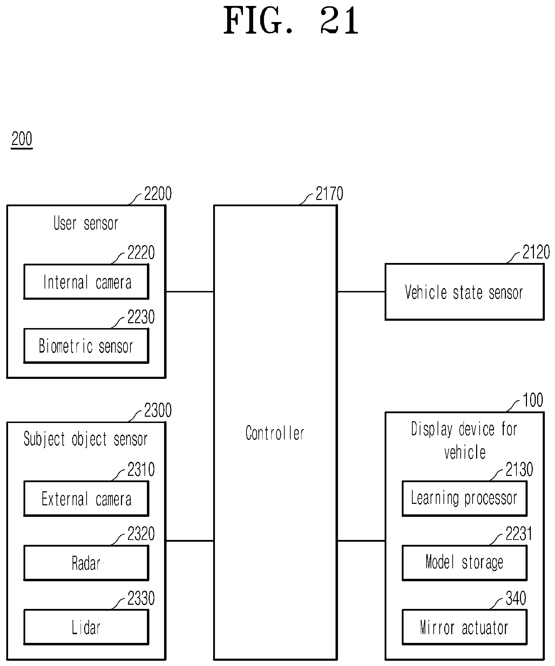

Hereinafter, the vehicle 200 that may be equipped with the display device 100 for the vehicle to which the algorithm for improving the overlap between the subject object and the augmented reality object in this manner may be applied will be described with further reference to FIG. 21. FIG. 21 is a block diagram of a vehicle according to one aspect of the present disclosure.

The vehicle 200 may include a user sensor 2200, a subject object sensor 2300, a vehicle state sensor 2120, the display device 100 for the vehicle, and a controller 2170. In one example, the vehicle 200 may include more components than this.

The user sensor 2200, which is for sensing presence and states of the driver and/or other passengers in the vehicle 200, may include an internal camera 2220 and a biometric sensor 2230.

The internal camera 2220 may obtain a vehicle interior image. The controller 2170 may sense the state of the user (the driver and/or the passenger) based on the vehicle interior image. The controller 2170 may sense a user's field of vision (i.e., the eyebox) by obtaining user's gaze information from the vehicle interior image. The controller 2170 may sense a user's gesture from the vehicle interior image.

The biometric sensor 2230 may obtain user's biometric information. The biometric sensor 2230 may include a sensor that may obtain the user's biometric information, and may obtain user's fingerprint information, heartbeat information, and the like using the sensor. The biometric information may be used for user authentication.

The subject object sensor 2300 is a device for detecting various subject objects (or external objects) located outside the vehicle 200. The subject objects may be various objects related to the operation of the vehicle 200. The subject objects may include a lane, another vehicle, a pedestrian, a two-wheeled vehicle, a traffic signal, light, a road, a structure, a speed bump, a terrain, an animal, and the like.

The subject object may be categorized into a moving object and a fixed object. For example, the moving object may be a concept including said another vehicle and the pedestrian. For example, the fixed object may be a concept including the traffic signal, the road, and the structure.

The vehicle state sensor 2120 may sense the state of the vehicle. The vehicle state sensor 2120 may include a posture sensor (e.g., a yaw sensor, a roll sensor, and a pitch sensor), a collision sensor, a wheel sensor, a speed sensor, a tilt sensor, a weight detection sensor, a heading sensor, a yaw sensor, an inertial measurement unit (IMU) sensor, a gyro sensor, a position module, a vehicle forward/backward movement sensor, a battery sensor, a fuel sensor, a tire sensor, a sensor of steering by a steering wheel rotation, a vehicle internal temperature sensor, a vehicle internal humidity sensor, an ultrasonic sensor, an illuminance sensor, an accelerator pedal position sensor, a brake pedal position sensor, and the like.

The vehicle state sensor 2120 may obtain sensing signals for vehicle posture information, vehicle collision information, vehicle direction information, vehicle location information (GPS information), vehicle angle information, vehicle speed information, vehicle acceleration information, vehicle tilt information, vehicle forward/backward movement information, battery information, fuel information, tire information, vehicle lamp information, vehicle internal temperature information, vehicle internal humidity information, a steering wheel rotation angle, a vehicle external illuminance, a pressure applied to an accelerator pedal, a pressure applied to a brake pedal, and the like.

The vehicle state sensor 2120 may further include an accelerator pedal sensor, a pressure sensor, an engine speed sensor, an air flow sensor (AFS), an intake air temperature sensor (ATS), a water temperature sensor (WTS), a throttle position sensor (TPS), a TDC sensor, a crank angle sensor (CAS), and the like, in addition thereto.

The display device 100 for the vehicle may further include a learning processor 2130, model storage 2231, and a mirror actuator 340 in addition to the components described in FIGS. 2 and 3.

The learning processor 2130 may train a model composed of an artificial neural network using learning data. Herein, trained artificial neural network or machine learning algorithm may be referred to as a learning model. The learning model may be used to infer a result value for new input data that is not the learning data, and the inferred value may be used as a basis for determination to perform a certain operation. The learning processor 2130 may not necessarily have to be included in the vehicle 200, and may be equipped in a separate external server (not shown).

The model storage 2231 may store a model (or an artificial neural network) that is being trained or has been trained via the learning processor 230.

The learning model stored in the model storage 2231 may be one that is being trained or has been trained by the learning processor 2130 in the vehicle 200, or one that has been trained in advance in the external server.

The mirror actuator 340 may move and/or rotate at least one of the fold mirror 315x and 315y and the concave mirror 325x and 325y.

The controller 2170 may control overall operation of each component in the vehicle 200. The controller 2170 may control each component of the display device 100 for the vehicle as well as each component within the vehicle 200. In this respect, the controller 2170 may be understood as a component belonging to the display device 100 for the vehicle. Alternatively, the controller 2170 may be understood as including a separate controller (not shown) for controlling the display device 100 for the vehicle.

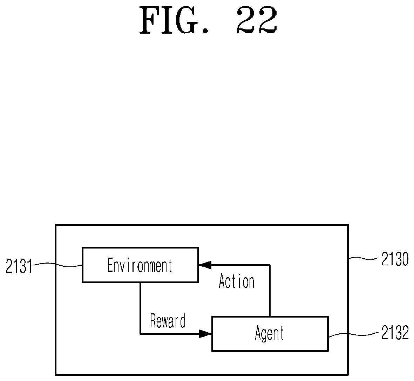

Hereinafter, the learning processor (or a simulator) will be described in more detail with reference to FIG. 22. FIG. 22 illustrates a learning processor according to one aspect of the present disclosure.

The learning processor 2130 may include an environment module 2131 and an agent module 2132. The environment module 2131 may be a simulation regarding the overlap between the subject object 400 and the augmented reality object 110 during the operation of the vehicle 200. The agent module 2132 may be a simulation regarding the display device 100 for the vehicle.

The learning processor 2130 may train the artificial intelligence model in the reinforcement learning manner. For example, the agent module 2132 may perform an action (e.g., PGU pixel adjustment and/or mirror actuation) for the environment module 2131, and receive a reward for the action for the environment module 2131, thereby training the artificial intelligence model.

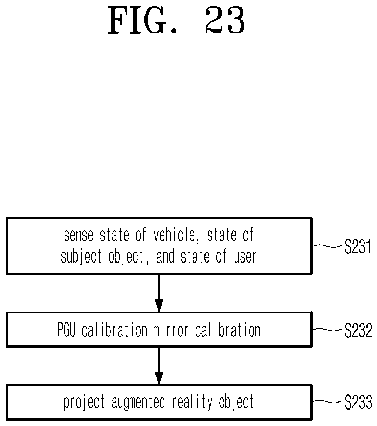

Hereinafter, with reference to FIG. 23, an augmented reality-based head-up display implemented via the display device 100 for the vehicle constructed as described above will be described. FIG. 23 is an implementation flowchart of an augmented reality-based head-up display according to one aspect of the present disclosure.

The controller 2170 may receive the state of the vehicle 200 from the vehicle state sensor 2120 during operation under conditions of class 1 or higher [S231]. The state of the vehicle 200 may include at least one of the vehicle posture information, the vehicle collision information, the vehicle direction information, the vehicle location information (the GPS information), the vehicle angle information, the vehicle speed information, the vehicle acceleration information, the vehicle tilt information, and the vehicle forward/backward movement information.

The controller 2170 may receive the state of the subject object detected from the subject object detection sensor 2300 during operation under conditions of class 2 or higher [S231]. The detected state of the subject object may include information on at least one of presence or absence of the subject object, a type of the subject object, a shape of the subject object, a size of the subject object, a movement of the subject object, and the like.

The controller 2170 may sense the state of the user (the driver and/or the passenger) from the user sensor 2200 during operation under conditions of class 3 or higher [S231]. The state of the user may include information on at least one of presence or absence of the user, a location of a user's eyebox, and the like.

The controller 2170 may calibrate (e.g., at least one of a location and a size of) the pixels of the PGU for the projection of the augmented reality object based on the state of the vehicle 200 and the objective function in the case of class 1 [S232].

The controller 2170 may calibrate the pixels of the PGU for the projection of the augmented reality object based on the state of the vehicle 200, the state of the subject object, and the objective function in the case of class 2 [S232].

In the case of class 3 or higher, the controller 2170 may calibrate the pixels of the PGU for the projection of the augmented reality object based on the state of the vehicle 200, the state of the subject object, the state of the user, and the objective function, and may operate the mirror actuator 340 to calibrate a location and a direction of at least one of the fold mirror and the concave mirror [S232].

In the case of classes 1 and 2, the controller 2170 may project the augmented reality object via the calibrated pixels of the PGU [S233].

In the case of class 3 or higher, the controller 2170 may project the augmented reality object via at least one of the calibrated fold mirror and concave mirror and the calibrated pixels of the PGU [S233].

The detailed description above should not be construed as restrictive in all respects but should be considered as illustrative. The scope of the present disclosure should be determined by a reasonable interpretation of the appended claims, and all changes within the equivalent scope of the present disclosure are intended to be included within the scope of the present disclosure.

## Claims

1. A display device (100) for a vehicle (200), the display device comprising:
a picture generation unit (300x, 300y) configured to output an augmented reality object corresponding to a subject object;
a mirror (315y, 325y) configured to reflect the augmented reality object towards a windshield (WS) of the vehicle;
storage (2231) configured to store an objective function for determining a projection location of the augmented reality object; and
a controller (2170) configured to:
receive a state of the vehicle; and
control the picture generation unit configured to output the augmented reality object to be calibrated based on the received state of the vehicle and the objective function,
wherein the objective function is generated based on at least one of the observed state of the vehicle, of the subject object and of the user.

2. The display device (100) of claim 1, wherein the objective function is generated via reinforcement learning of an artificial intelligence model.

3. The display device (100) of claim 2, wherein the objective function is generated by combining the artificial intelligence model subjected to the reinforcement learning with a Newton-Raphson method model.

4. The display device (100) of any of claims 1 to 3, wherein the state of the vehicle includes at least one of vehicle posture information, vehicle collision information, vehicle direction information, vehicle location information (GPS information), vehicle angle information, vehicle speed information, vehicle acceleration information, vehicle tilt information, and vehicle forward/backward movement information.

5. The display device (100) of any of claims 1 to 4, wherein the controller (2170) is configured to:
further receive a state of the subject object; and
control the picture generation unit configured to output the augmented reality object to be calibrated based on the received state of the subject object, the state of the vehicle, and the objective function.

6. The display device (100) of claim 5, wherein the state of the subject object includes information on at least one of presence or absence of the subject object, a type of the subject object, a shape of the subject object, a size of the subject object, and a movement of the subject object.

7. The display device (100) of claim 5 or 6, wherein the controller (2170) is configured to:
further receive a state of a user; and
control the picture generation unit configured to output the augmented reality object to be calibrated based on the received state of the user, the state of the subject object, the state of the vehicle, and the objective function.

8. The display device (100) of claim 7, wherein the state of the user includes information on at least one of presence or absence of the user and a location of an eyebox of the user.

9. The display device (100) of claim 7, further comprising a mirror actuator (340) configured to perform at least one of a movement and a rotation of the mirror,
wherein the controller (2170) is configured to control the mirror actuator to perform at least one of the movement and the rotation of the mirror based on the received state of the user, the state of the subject object, the state of the vehicle, and the objective function.

10. The display device (100) of claim 2, wherein the artificial intelligence model is based on a proximal policy optimization (PPO) algorithm or a soft actor-critic (SAC) algorithm.

11. A method for controlling a display device (100) for a vehicle (200), the method comprising:
receiving a state of the vehicle; and calibrating a picture generation unit (300x, 300y) configured to output an augmented reality object based on an objective function for determining a projection location of the augmented reality object corresponding to a subject object and the received state of the vehicle,
wherein the objective function is generated based on at least one of the observed state of the vehicle, of the subject object and of the user.

12. The method of claim 11, wherein the objective function is generated via reinforcement learning of an artificial intelligence model.

13. The method of claim 12, wherein the objective function is generated by combining the artificial intelligence model subjected to the reinforcement learning with a Newton-Raphson method model.

14. The method of any of claims 11 to 13, wherein the state of the vehicle includes at least one of vehicle posture information, vehicle collision information, vehicle direction information, vehicle location information (GPS information), vehicle angle information, vehicle speed information, vehicle acceleration information, vehicle tilt information, and vehicle forward/backward movement information.

15. The method of any of claims 11 to 14, further comprising:
receiving a state of the subject object; and
calibrating the picture generation unit configured to output the augmented reality object based on the received state of the subject object, the state of the vehicle, and the objective function.

## Patentansprüche

1. Anzeigevorrichtung (100) für ein Fahrzeug (200), wobei die Anzeigevorrichtung aufweist:
eine Bilderzeugungseinheit (300x, 300y), die konfiguriert ist, ein Augmented-Reality-Objekt auszugeben, das einem Gegenstandsobjekt entspricht;
einen Spiegel (315y, 325y), der konfiguriert ist, das Augmented-Reality-Objekt zu einer Windschutzscheibe (WS) des Fahrzeugs zu reflektieren;
einen Speicher (2231), der konfiguriert ist, eine Zielfunktion zum Bestimmen eines Projektionsortes des Augmented-Reality-Objekts zu speichern; und
eine Steuerung (2170), die konfiguriert ist, um:
einen Zustand des Fahrzeugs zu empfangen; und
die Bilderzeugungseinheit, die konfiguriert ist, das Augmented-Reality-Objekt auszugeben, so zu steuern, dass sie basierend auf dem empfangenen Zustand des Fahrzeugs und der Zielfunktion kalibriert wird,
wobei die Zielfunktion basierend auf mindestens einem von dem beobachteten Zustand des Fahrzeugs, dem Gegenstandsobjekt und dem Benutzer erzeugt wird.

2. Anzeigevorrichtung (100) nach Anspruch 1, wobei die Zielfunktion durch Reinforcement Learning eines Modells künstlicher Intelligenz erzeugt wird.

3. Anzeigevorrichtung (100) nach Anspruch 2, wobei die Zielfunktion durch Kombinieren des dem Reinforcement Learning unterzogenen Modells der künstlichen Intelligenz mit einem Newton-Raphson-Verfahrens-Modell erzeugt wird.

4. Anzeigevorrichtung (100) nach einem der Ansprüche 1 bis 3, wobei der Zustand des Fahrzeugs mindestens eines von Fahrzeugstellungsinformationen, Fahrzeugkollisionsinformationen, Fahrzeugrichtungsinformationen, Fahrzeugstandortinformationen (GPS-Informationen), Fahrzeugwinkelinformationen, Fahrzeuggeschwindigkeitsinformationen, Fahrzeugbeschleunigungsinformationen, Fahrzeugneigungsinformationen und Fahrzeug-Vorwärts-/Rückwärtsbewegungsinformationen aufweist.

5. Anzeigevorrichtung (100) nach einem der Ansprüche 1 bis 4, wobei die Steuerung (2170) konfiguriert ist, um:
ferner einen Zustand des Gegenstandsobjekts zu empfangen; und
die Bilderzeugungseinheit, die konfiguriert ist, das Augmented-Reality-Objekt auszugeben, so zu steuern, dass sie basierend dem empfangenen Zustand des Gegenstandsobjekts, des Zustands des Fahrzeugs und der Zielfunktion kalibriert wird.

6. Anzeigevorrichtung (100) nach Anspruch 5, wobei der Zustand des Gegenstandsobjekts Informationen über mindestens eines des Vorhandenseins oder Fehlens des Gegenstandsobjekts, eines Typs des Gegenstandsobjekts, einer Form des Gegenstandsobjekts, einer Größe des Gegenstandsobjekts und einer Bewegung des Gegenstandsobjekts aufweist.

7. Anzeigevorrichtung (100) nach Anspruch 5 oder 6, wobei die Steuerung (2170) konfiguriert ist, um:
ferner einen Zustand eines Benutzers zu empfangen; und
die Bilderzeugungseinheit, die konfiguriert ist, das Augmented-Reality-Objekt auszugeben, so zu steuern, dass sie basierend dem empfangenen Zustand des Benutzers, dem Zustand des Gegenstandsobjekts, dem Zustand des Fahrzeugs und der Zielfunktion kalibriert wird.

8. Anzeigevorrichtung (100) nach Anspruch 7, wobei der Zustand des Benutzers Informationen über mindestens eines der Anwesenheit oder der Abwesenheit des Benutzers und einen Ort einer Eyebox des Benutzers aufweist.

9. Anzeigevorrichtung (100) nach Anspruch 7, die ferner einen Spiegelaktuator (340) aufweist, der konfiguriert ist, mindestens eines einer Bewegung und einer Drehung des Spiegels auszuführen,
wobei die Steuerung (2170) konfiguriert ist, den Spiegelaktuator zu steuern, mindestens eines der Bewegung und der Drehung des Spiegels basierend auf dem empfangenen Zustand des Benutzers, dem Zustand des Gegenstandsobjekts, dem Zustand des Fahrzeugs und der Zielfunktion auszuführen.

10. Anzeigevorrichtung (100) nach Anspruch 2, wobei das Modell der künstlichen Intelligenz auf einem Proximal-Policy-Optimization-, PPO-, Algorithmus oder einem Soft-Actor-Critic-, SAC-, Algorithmus basiert.

11. Verfahren zum Steuern einer Anzeigevorrichtung (100) für ein Fahrzeug (200), wobei das Verfahren aufweist:
Empfangen eines Zustands des Fahrzeugs; und
Kalibrieren einer Bilderzeugungseinheit (300x, 300y), die konfiguriert ist, ein Augmented-Reality-Objekt auszugeben, basierend auf einer Zielfunktion zum Bestimmen eines Projektionsorts des Augmented-Reality-Objekts, das einem Gegenstandsobjekt entspricht, und dem empfangenen Zustand des Fahrzeugs,
wobei die Zielfunktion basierend auf mindestens einem von dem beobachteten Zustand des Fahrzeugs, dem Gegenstandsobjekt und dem Benutzer erzeugt wird.

12. Verfahren nach Anspruch 11, wobei die Zielfunktion durch Reinforcement Learning eines Modells künstlicher Intelligenz erzeugt wird.

13. Verfahren nach Anspruch 12, wobei die Zielfunktion durch Kombinieren des dem Reinforcement Learning unterzogenen Modells der künstlichen Intelligenz mit einem Newton-Raphson-Verfahrens-Modell erzeugt wird.

14. Verfahren nach einem der Ansprüche 11 bis 13, wobei der Zustand des Fahrzeugs mindestens eines von Fahrzeugstellungsinformationen, Fahrzeugkollisionsinformationen, Fahrzeugrichtungsinformationen, Fahrzeugstandortinformationen (GPS-Informationen), Fahrzeugwinkelinformationen, Fahrzeuggeschwindigkeitsinformationen, Fahrzeugbeschleunigungsinformationen, Fahrzeugneigungsinformationen und Fahrzeug-Vorwärts-/Rückwärtsbewegungsinformationen aufweist.

15. Verfahren nach einem der Ansprüche 11 bis 14, das ferner aufweist:
Empfangen eines Zustands des Gegenstandsobjekts; und
Kalibrieren der Bilderzeugungseinheit, die konfiguriert ist, das Augmented-Reality-Objekt auszugeben, basierend auf dem empfangenen Zustand des Gegenstandsobjekts, dem Zustand des Fahrzeugs und der Zielfunktion.

## Revendications

1. Dispositif d'affichage (100) pour un véhicule (200), ledit dispositif d'affichage comprenant :
une unité de génération d'image (300x, 300y) prévue pour générer un objet de réalité augmentée correspondant à un objet sujet ;
un miroir (315y, 325y) prévu pour réfléchir l'objet de réalité augmentée vers un pare-brise (WS) du véhicule ;
une mémoire (2231) prévue pour stocker une fonction d'objectif permettant de déterminer un emplacement de projection de l'objet de réalité augmentée ; et
un contrôleur (2170) prévu pour :
recevoir un état du véhicule ; et
commander l'étalonnage de l'unité de génération d'image prévue pour générer l'objet de réalité augmentée sur la base de l'état de véhicule reçu et de la fonction d'objectif,
où la fonction d'objectif est générée sur la base de l'état observé du véhicule, et/ou de l'objet sujet et/ou de l'utilisateur.

2. Dispositif d'affichage (100) selon la revendication 1, où la fonction d'objectif est générée par apprentissage par renforcement d'un modèle d'intelligence artificielle.

3. Dispositif d'affichage (100) selon la revendication 2, où la fonction d'objectif est générée par combinaison du modèle d'intelligence artificielle soumis à l'apprentissage par renforcement avec un modèle de méthode de Newton-Raphson.

4. Dispositif d'affichage (100) selon l'une des revendications 1 à 3, où l'état du véhicule comprend au moins l'une des informations suivantes : information de position du véhicule, information de collision du véhicule, information de direction du véhicule, information de localisation du véhicule (information GPS), information d'angle du véhicule, information de vitesse du véhicule, information d'accélération du véhicule, information d'inclinaison du véhicule, et information de marche avant/arrière du véhicule.

5. Dispositif d'affichage (100) selon l'une des revendications 1 à 4, où le contrôleur (2170) est prévu pour :
recevoir en outre un état de l'objet sujet ; et
commander l'étalonnage de l'unité de génération d'image prévue pour générer l'objet de réalité augmentée sur la base de l'état d'objet sujet reçu, de l'état de véhicule et de la fonction d'objectif.

6. Dispositif d'affichage (100) selon la revendication 5, où l'état de l'objet sujet comprend des informations sur la présence ou l'absence de l'objet sujet, et/ou un type de l'objet sujet, et/ou une forme de l'objet sujet, et/ou une dimension de l'objet sujet, et/ou un déplacement de l'objet sujet.

7. Dispositif d'affichage (100) selon la revendication 5 ou la revendication 6, où le contrôleur (2170) est prévu pour :
recevoir en outre un état d'un utilisateur ; et
commander l'étalonnage de l'unité de génération d'image prévue pour générer l'objet de réalité augmentée sur la base de l'état de l'utilisateur reçu, de l'état de l'objet sujet, de l'état du véhicule et de la fonction d'objectif.

8. Dispositif d'affichage (100) selon la revendication 7, où l'état de l'utilisateur comprend des informations sur la présence ou l'absence de l'utilisateur et/ou la localisation d'une région oculaire de l'utilisateur.

9. Dispositif d'affichage (100) selon la revendication 7, comprenant en outre un actionneur de miroir (340) prévu pour déclencher un mouvement et/ou une rotation du miroir, où le contrôleur (2170) est prévu pour commander l'actionneur de miroir afin qu'il déclenche le mouvement et/ou la rotation du miroir sur la base de l'état de l'utilisateur reçu, de l'état de l'objet sujet, de l'état du véhicule et de la fonction d'objectif.

10. Dispositif d'affichage (100) selon la revendication 2, où le modèle d'intelligence artificielle est basé sur un algorithme d'optimisation de politique proximale, PPO, ou un algorithme acteur-critique souple, SAC.

11. Procédé de commande d'un dispositif d'affichage (100) pour un véhicule (200), ledit procédé comprenant :
la réception d'un état du véhicule ; et
l'étalonnage d'une unité de génération d'image (300x, 300y) prévue pour générer un objet de réalité augmentée sur la base d'une fonction d'objectif permettant de déterminer un emplacement de projection de l'objet de réalité augmentée correspondant à un objet sujet et à l'état reçu du véhicule,
où la fonction d'objectif est générée sur la base de l'état observé du véhicule, et/ou de l'objet sujet, et/ou de l'utilisateur.

12. Procédé selon la revendication 11, où la fonction d'objectif est générée par apprentissage par renforcement d'un modèle d'intelligence artificielle.

13. Procédé selon la revendication 12, où la fonction d'objectif est générée par combinaison du modèle d'intelligence artificielle soumis à l'apprentissage par renforcement avec un modèle de méthode de Newton-Raphson.

14. Procédé selon l'une des revendications 11 à 13, où l'état du véhicule comprend au moins l'une des informations suivantes : information de position du véhicule, information de collision du véhicule, information de direction du véhicule, information de localisation du véhicule (information GPS), information d'angle du véhicule, information de vitesse du véhicule, information d'accélération du véhicule, information d'inclinaison du véhicule, et information de marche avant/arrière du véhicule.

15. Procédé selon l'une des revendications 11 à 14, comprenant en outre :
la réception d'un état de l'objet sujet ; et
l'étalonnage de l'unité de génération d'image prévue pour générer l'objet de réalité augmentée sur la base de l'état d'objet sujet reçu, de l'état de véhicule et de la fonction d'objectif.
